# DEMANDE DE BREVET EUROPEEN

(11) **EP 2 876 583 A1**
(43) Date de publication de la demande: **27.05.2015**
(21) Numéro de dépôt: 13306598.7
(22) Date de dépôt: 22.11.2013
(51) Int. Cl.: G06K 19/077

(54) **Document de sécurité et son procédé de fabrication**

(71) Demandeur: Gemalto SA, 92190 Meudon (FR)
(72) Inventeur: Alleysson, Blandine, 13705 La Ciotat (FR); Gaspari, Sébastien, 13705 La Ciotat (FR); Bajolle, Antoine, 13705 La Ciotat (SG); Bihan, Guy, 13705 La Ciotat (FR); Bousquet, Christophe, 13705 La Ciotat (FR)

(57) **Abrégé**

L'invention concerne un document de sécurité comprenant au moins un élément sécuritaire visuel (13). Le document de sécurité est principalement caractérisé en ce que l'élément sécuritaire visuel (13) est constitué par un matériau métallique formant un motif en surépaisseur visible en surface dudit document de sécurité.

## Description

### [Domaine de l'invention]

L'invention porte sur les documents ou supports de sécurité et leur procédé de fabrication.

L'invention concerne plus particulièrement un document de sécurité comprenant un élément sécuritaire visuel permettant de détecter facilement une modification frauduleuse du document ou un faux document. Elle concerne également un procédé de fabrication d'un tel document de sécurité.

Les documents de sécurité sont associés à des applications sécurisées. Ils constituent notamment des passeports, des cartes d'identités, des permis de conduire, des cartes d'accès, des cartes de santé, des cartes téléphoniques prépayées ou des cartes bancaires par exemple. De tels documents sont largement utilisés et comprennent en général un module électronique. Lorsqu'ils comprennent un module électronique, ils peuvent fonctionner avec et/ou sans contact selon l'application à laquelle ils sont destinés. Ils peuvent se présenter notamment sous forme de carte, ou de livret par exemple. De tels documents de sécurité sont personnalisés graphiquement. Les informations personnelles sont les données du porteur du document, telles que par exemple sa photo, son nom, sa date de naissance, son numéro de sécurité sociale, une information biométrique telle qu'une empreinte par exemple, une date de validité etc... Ces informations personnelles sont imprimées sur la surface du document ou dans un ou plusieurs feuillets du document lorsqu'il se présente sous forme de livret. Du fait de la valeur importante associée à ces informations personnelles, ces documents de sécurité sont souvent la cible de malfaiteurs qui les copient, les modifient ou les contrefont.

Pour prévenir ces actes délictueux, des éléments sécuritaires visuels et/ou tactiles sont généralement introduits dans les documents de sécurité. Ces éléments sécuritaires sont classés par niveau selon la manière dont ils peuvent être détectés. Ainsi, les éléments sécuritaires de niveau 1 sont des éléments visibles à l'oeil nu. Ces éléments regroupent par exemple les guilloches, les dispositifs à variabilité optique (généralement désignés par l'acronyme anglais OVD pour « Optically Variable Device ») tels que des hologrammes ou les impressions irisées par exemple, les images laser variable / multiples (généralement désignées par l'acronyme anglais CLI/MLI pour « Changeable Laser Image/ Multiple Laser Image) etc... Les éléments sécuritaires de niveau 2 sont les éléments détectables au moyen d'un équipement simple. Ainsi, les éléments sécuritaires de niveau 2 peuvent par exemple comprendre des impressions fluorescentes lisibles sous lampe UV, ou des micro-impressions lisibles au moyen d'une lentille convexe par exemple. Enfin, les éléments sécuritaires de niveau 3 sont des éléments détectables au moyen d'un équipement spécifique et/ou sophistiqué, tels que les filigranes numériques par exemple. Quoiqu'il en soit, les documents de sécurité incorporent en général plusieurs éléments sécuritaires de niveaux différents.

L'invention concerne plus particulièrement, mais de manière non limitative, des cartes ou livrets de type passeports qui trouvent notamment leurs applications dans le contrôle d'identité, le contrôle d'accès, la santé, et/ou la banque. Le support peut aussi être de tout type comportant des couches ou feuilles superposées, tel qu'un tissu, un objet, meuble, accessoire vestimentaire, bracelet..

### [Art antérieur]

La réalisation des éléments sécuritaires est en général relativement coûteuse même pour les éléments de premier niveau, car leur réalisation requiert en général plusieurs étapes minutieuses avec des équipements spécifiques.

De plus, lors de la fabrication des documents de sécurité comprenant une antenne radiofréquence intégrée dans le corps du document, une attention particulière est portée sur l'intégration de l'antenne afin que celle-ci ne crée pas de surépaisseur. Une telle surépaisseur est en effet synonyme de défaut visuel. Par conséquent, l'étape d'intégration de l'antenne au sein des couches plastiques de constitution du document de sécurité est réalisée de manière minutieuse et donc relativement lentement afin de s'assurer que l'intégralité du fil d'antenne est correctement noyée dans le document et ne crée pas de surépaisseur. Par conséquent l'étape de réalisation de l'antenne radio fréquence a également tendance à augmenter le coût de fabrication des documents de sécurité.

### [Problème technique]

L'invention a donc pour but de remédier à au moins un des inconvénients de l'art antérieur. En particulier, l'invention vise à proposer un procédé de fabrication d'un document de sécurité intégrant un élément sécuritaire visuel élaboré de manière simple, rapide et peu coûteuse. L'invention vise également à proposer un document de sécurité comprenant au moins un élément sécuritaire visuel facile et rapide à réaliser et donc peu coûteux.

### [Résumé de l'invention]

A cet effet, l'invention a pour objet un document de sécurité comprenant au moins un élément sécuritaire visuel, ledit document de sécurité étant caractérisé en ce que l'élément sécuritaire visuel est constitué par un matériau métallique formant un motif en surépaisseur visible en surface dudit document de sécurité.

Selon d'autres caractéristiques optionnelles du document de sécurité :
- le document de sécurité comprend en outre une antenne radiofréquence noyée dans son corps, et l'antenne et l'élément sécuritaire visuel sont réalisés dans le même matériau métallique,
- l'antenne forme elle aussi un motif en surépaisseur en surface du document de sécurité, de sorte qu'elle fait partie intégrante dudit élément sécuritaire,
- l'élément sécuritaire et l'antenne présentent des surépaisseurs différentes en surface dudit document,
- le matériau métallique de constitution de l'antenne et de l'élément sécuritaire est choisi parmi au moins l'un des matériaux suivants : un fil métallique, une feuille métallique gravée, une encre chargée de particules métalliques,
- le document de sécurité se présente sous forme de carte ou de livret.

Ainsi, l'élément sécuritaire peut être réalisé de manière simple au moment de la réalisation de l'antenne. De plus, l'antenne n'a alors plus besoin d'être totalement noyée et peut former une surépaisseur sans que cela soit considéré comme étant un défaut visuel, puisque dans ce cas, elle fait partie intégrante de l'élément sécuritaire. Par conséquent, l'antenne et l'élément sécuritaire peuvent tous deux être réalisés en une seule étape et de manière rapide. Le coût de fabrication s'en trouve donc réduit.

L'invention a également pour objet un procédé de fabrication d'un document de sécurité comprenant, noyée dans son corps, au moins un élément sécuritaire visuel, ledit procédé étant caractérisé en ce qu'il comprend une étape de réalisation de l'élément sécuritaire visuel au moyen d'un matériau métallique appliqué sous la forme d'un motif en surépaisseur.

Selon d'autres caractéristiques optionnelles du procédé de fabrication :
- le procédé comprend en outre une étape de réalisation d'une antenne radiofréquence, et les étapes de réalisation de l'élément sécuritaire et de réalisation de l'antenne utilisent le même matériau métallique,
- les étapes de réalisation de l'antenne et de l'élément sécuritaire sont simultanées,
- l'antenne et l'élément sécuritaire sont réalisés par incrustation d'un fil métallique dans une couche de constitution du document,
- le fil métallique de constitution de l'antenne et de l'élément sécuritaire est incrusté, dans la couche de constitution du document, à des profondeurs différentes selon le motif à réaliser, de sorte que l'antenne peut elle aussi présenter une surépaisseur,
- l'antenne et l'élément sécuritaire sont réalisés par apport de matière sur une couche de constitution du document,
- les épaisseurs de l'antenne et de l'élément sécuritaire sont différentes, de sorte que l'antenne peut elle aussi présenter une surépaisseur,
- le procédé comprend en outre une étape consistant à couper un lien reliant l'antenne et l'élément sécuritaire,
- l'étape de coupure du lien reliant l'antenne à l'élément sécuritaire est réalisée simultanément à une étape de réalisation d'une cavité d'accueil d'un module électronique destiné à être connecté à deux extrémités de l'antenne,
- le procédé comprend en outre une étape de laminage d'une couche supérieure, sur la couche supportant l'antenne et l'élément sécuritaire, ladite couche supérieure formant une surface externe dudit document et épousant le motif en surépaisseur de l'élément sécuritaire.

### [Brève description des figures]

D'autres particularités et avantages de l'invention apparaitront à la lecture de la description suivante faite à titre d'exemple illustratif et non limitatif, en référence aux Figures annexées qui représentent :
- Les Figures 1 et 2, des schémas d'une couche de constitution d'un document de sécurité vue de dessus et réalisée selon deux modes de réalisation;
- La Figure 3, un schéma en coupe d'une couche de constitution d'un document de sécurité,
- La Figure 4, un schéma d'une vue de dessus de la surface externe d'un document de sécurité.

### [Description]

Dans la suite de la description, on entend par « fil », un matériau métallique permettant de réaliser les spires d'une antenne. Ce matériau métallique peut se présenter sous la forme d'un fil métallique destiné à être incrusté, ou d'une piste métallique obtenue par gravure d'une feuille métallique ou d'une piste métallique obtenue par impression d'une encre métallique.

Par document de sécurité, on entend tout document sous forme de carte ou de livret, portant des informations personnelles à protéger. Ils trouvent des applications notamment, mais non exclusivement, dans les passeports, les cartes d'identités, les permis de conduire, les cartes d'accès, les cartes de santé, les cartes téléphoniques prépayées ou les cartes bancaires par exemple.

Les documents de sécurité peuvent comprendre, ou non, une antenne de communication radiofréquence. Les exemples décrits ci-dessous font référence à des documents comprenant une telle antenne. L'invention ne se limite cependant pas à ces cas et s'applique également à des documents de sécurité ne comprenant pas d'antenne.

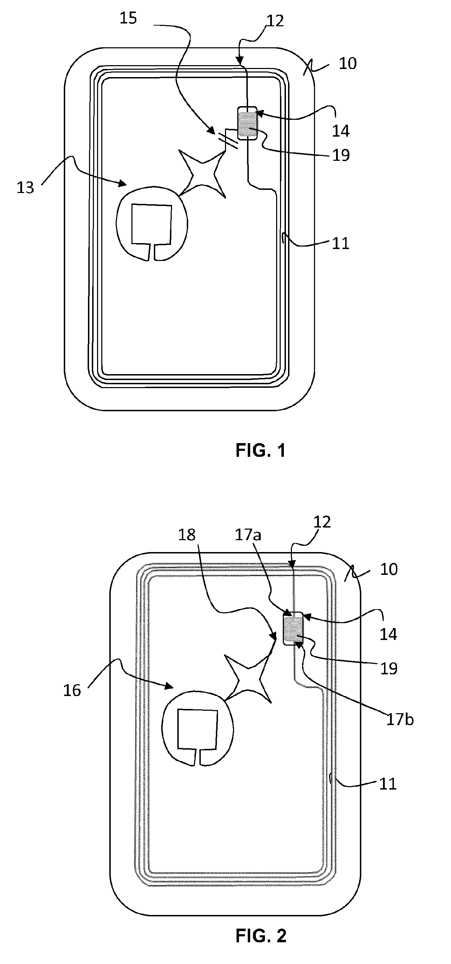

La Figure 1 schématise une vue de dessus d'une couche 10 de constitution d'un document de sécurité supportant une antenne 11 et un élément sécuritaire visuel 13 réalisés selon un premier mode de réalisation. La couche 10 est en général réalisée dans un matériau plastique, tel que par exemple du PVC (Polychlorure de vinyl), du PLA (acide polylactique), du PC (polycarbonate), du PET ou PETG (Polyethylènetéréphtalate ou polyéthylènetéréphtalate glycolisé), dans un papier ou dans un matériau synthétique commercialisé sous la marque « Teslin », ou tout autre papier dit « synthétique ».

Cette couche 10 est destinée à être laminée et/ou collée à au moins une autre couche de constitution. L'assemblage des couches de constitution permet de former un document de sécurité au format d'une carte ou d'un livret, dans le cas d'un passeport par exemple. Dans le cas du livret, cet assemblage de couches comprenant l'antenne 11 et l'élément sécuritaire 13 peut former un feuillet interne ou la couverture du livret.

Selon le premier mode de réalisation illustré sur la Figure 1, un élément sécuritaire visuel 13 est réalisé avec un matériau métallique identique à celui utilisé pour réaliser l'antenne. En fait, dans ce cas, l'antenne 11 et l'élément sécuritaire 13 sont réalisés simultanément, dans une seule et même étape, avec le même matériau métallique. L'élément sécuritaire 13 est donc réalisé dans le prolongement de l'antenne 11. Cet élément sécuritaire 13 devant être visible depuis la surface externe du document, il est réalisé en surépaisseur, de sorte qu'après le laminage d'une couche supplémentaire sur la couche 10, cet élément sécuritaire soit toujours visible, comme un embossage positif, sur la surface externe du document.

Lorsque l'antenne 11 et l'élément sécuritaire 13 sont réalisés par incrustation d'un fil métallique dans la couche 10 de constitution du document, on utilise de préférence une sonotrode qui, lorsqu'elle est soumise à des ondes ultrasonores, restitue l'énergie vibratoire résultante dans le fil à incruster.

La profondeur d'incrustation du fil métallique dépend notamment du matériau de constitution de la couche 10 dans laquelle il est incrusté, de la cadence de la sonotrode par rapport à la couche 10 dans laquelle le fil doit être incrusté et de la forme du motif à réaliser avec le fil. En effet, pour avoir une incrustation uniforme du fil, il faut adapter les paramètres de réglage de la sonotrode selon que le fil est à incruster dans une ligne droite ou dans une courbe par exemple. On détermine donc un ensemble de paramètres de réglage de la sonotrode pour chaque motif à réaliser, en fonction de la profondeur d'incrustation désirée. Un ensemble de paramètres est définit par la force de contact de la sonotrode sur la couche 10, l'amplitude des ondes ultrasonores, la vitesse de déplacement de la sonotrode sur la couche 10 et l'accélération de la sonotrode sur la couche 10. On détermine donc un premier ensemble de paramètres associé à la réalisation de l'antenne 11 et un deuxième ensemble de paramètres associé à la réalisation de l'élément sécuritaire 13.

De cette manière, il est possible de définir une profondeur d'incrustation du fil métallique dans la couche 10 qui est différente pour l'antenne 11 et l'élément sécuritaire 13. On peut donc veiller à ce que l'antenne 11 ne soit pas visible de l'extérieur ou alors qu'elle fasse partie intégrante de l'élément sécuritaire 13 en formant elle aussi une surépaisseur visible de l'extérieur. De plus, l'antenne 11 et l'élément sécuritaire 13 peuvent présenter des surépaisseurs différentes.

Par conséquent, au moment de la réalisation de l'antenne 11 sur la couche 10 de constitution du document, on réalise une incrustation du fil, avec un premier ensemble de paramètres de réglages de la sonotrode de manière à former le motif spiralé de l'antenne. Ce premier ensemble de paramètres permet d'incruster entre 50 et 100% du diamètre du fil par exemple. Sans s'arrêter, lorsque le motif spiralé de l'antenne est terminé, on change l'ensemble de paramètres de réglages de la sonotrode pour passer à un 2eme ensemble de paramètres de manière à réaliser le motif de l'élément sécuritaire 13 avec incrustation du fil sur une profondeur éventuellement moins importante que pour le fil d'antenne. L'élément sécuritaire peut se présenter sous une forme quelconque, il peut représenter un logo et/ou ou un enchainement alphanumérique par exemple.

L'antenne 11 et l'élément sécuritaire 13 étant dans ce cas réalisés en une seule étape et dans le prolongement l'un de l'autre, ils sont reliés l'un à l'autre par le fil métallique. Les propriétés radio fréquences de l'antenne sont liées au nombre de spires connectées au module électronique 19. Le motif rajouté constitutif de l'élément sécuritaire 13 est réalisé avec un seul fil et ne forme pas un motif spiralé. Il ne devrait donc pas impacter sur les propriétés de l'interface de communication radiofréquence. Cependant, le fait de laisser l'élément sécuritaire 13 connecté à l'antenne 11 peut parfois modifier légèrement sa fréquence de résonnance et perturber plus ou moins son fonctionnement. C'est pourquoi, dans ce cas, une étape supplémentaire optionnelle consiste à couper le lien entre l'antenne et l'élément sécuritaire, tel que schématisé par la double barre 15 sur la Figure 1.

Une autre étape du procédé de fabrication du document consiste en outre à ménager une cavité 14 d'accueil dans la couche 10 afin d'y insérer un module électronique 19 et de le connecter électriquement à l'antenne 11. La réalisation de cette cavité peut être réalisée avant ou après la réalisation de l'antenne et de l'élément sécuritaire. Lorsqu'elle est réalisée après, elle peut dans ce cas être réalisée de sorte qu'elle permette simultanément de couper le fil 15 reliant le motif spiralé de l'antenne 11 et l'élément sécuritaire 13. La connexion du module électronique 19 aux extrémités du fil d'antenne est ensuite réalisée par un procédé de thermocompression connu de l'homme du métier.

Selon un deuxième mode de réalisation, schématisé sur la Figure 2, l'antenne 11 et le motif constitutif de l'élément sécuritaire 16 sont réalisés en deux étapes séparées. Cependant, l'élément sécuritaire est toujours réalisé à partir d'un matériau métallique identique à celui utilisé pour la réalisation de l'antenne. Dans ce cas, l'antenne 11 et l'élément sécuritaire 16 ne sont donc pas réalisés simultanément lors de la même étape, mais l'un après l'autre. Dans un premier temps l'antenne 11 est donc réalisée, par exemple par incrustation d'un fil métallique dans la couche 10, en utilisant une sonotrode dont les paramètres de réglages sont établis selon un premier ensemble de paramètres prédéterminé. L'antenne forme alors un motif spiralé, et présente deux extrémités 17a, 17b en regard l'une de l'autre et destinées à être connecté électriquement à un module électronique 19 ultérieurement reporté dans une cavité 14 ménagée entre ces deux extrémités 17a, 17b.

Le motif de l'élément sécuritaire 16 est réalisé dans un deuxième temps, par incrustation par exemple du même fil métallique dans la couche 10, en utilisant la même sonotrode dont les paramètres de réglages sont réglés sur un deuxième ensemble de paramètres prédéterminés de sorte que le motif réalisé avec le fil présente une surépaisseur visible depuis la face externe du document.

Dans ce cas l'élément sécuritaire 16 présente une extrémité 18 qui n'est pas reliée aux extrémités 17a, 17b de l'antenne 11. Par conséquent, selon ce deuxième mode de réalisation, l'étape optionnelle de coupure du lien entre l'antenne et l'élément sécuritaire n'a pas lieu d'être.

Quel que soit le mode de réalisation, lors de la réalisation de l'antenne, il existe une zone 12 où le fil d'antenne ne peut pas être incrusté. En effet, il s'agit d'une zone où une spire de l'antenne passe au-dessus des autres spires pour que son extrémité atteigne un emplacement en regard du module 19 à connecter. Les spires d'antenne qui sont recouvertes sont préalablement enduites d'un vernis isolant afin de ne pas créer de court-circuit. Cette zone 12 est encore dénommée pont-isolant.

Selon une variante de réalisation, l'antenne et de l'élément sécuritaire peuvent être réalisés selon d'autres techniques, par exemple par apport de matière. Dans ce cas, on joue sur l'épaisseur de la matière apportée pour créer une surépaisseur plus ou moins importante. De la même manière que pour l'incrustation, les épaisseurs de l'antenne d'une part et de l'élément sécuritaire d'autre part, peuvent être différentes, de sorte que les deux éléments ne présentent pas la même surépaisseur en surface du document.

L'apport de matière peut être réalisé par impression d'encre chargée de particules métallique. Dans ce cas, on joue sur le jet de matière par exemple, pour faire varier l'épaisseur du fil.

L'apport de matière peut également être réalisé par fixation d'une feuille métallique sur la couche 10, puis gravure de cette feuille afin de réaliser le fil d'antenne et de l'élément sécuritaire. Dans ce cas, la gravure peut être réalisée par laser et/ou par attaque chimique par exemple. On joue alors sur la profondeur de gravure pour faire varier l'épaisseur du fil.

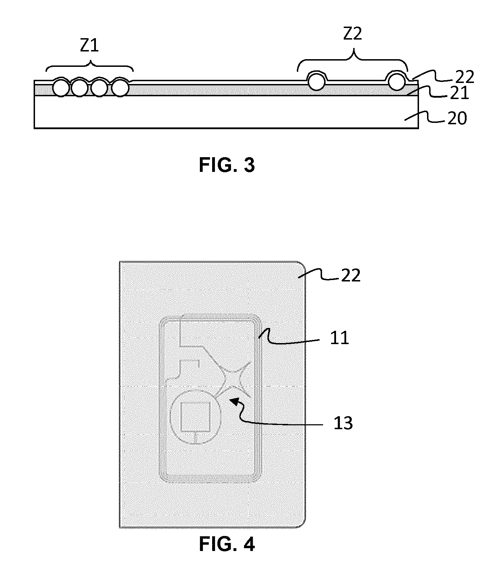

Les Figures 3 et 4 schématisent respectivement une vue en coupe et une vue de dessus d'une couverture de passeport par exemple. Sur le schéma en coupe de la Figure 3, ne sont représentés que le fil d'antenne et de l'élément sécuritaire. La cavité et le module électronique ne sont pas représentés pour ne pas surcharger la Figure. La couche 20 représente alors un substrat en papier ou en matériau synthétique de type Teslin par exemple, dont l'épaisseur est en général comprise entre 80 et 400µm. Cette couche 20 est en général recouverte d'un adhésif 21, dont l'épaisseur est comprise entre 15 et 150µm. Cet adhésif permet ainsi la fixation ultérieure d'une autre couche 22 formant la surface externe de la couverture et épousant les surépaisseurs créées à la surface de la couche 20. Cette couche 22 est avantageusement réalisée dans un matériau compatible ou identique à celui de la couche 20 inférieure.

Un fil métallique, dont le diamètre est en général compris entre 80 et 200µm est incrusté dans la couche 20. Comme illustré sur la Figure 3, ce fil n'est pas incrusté de la même manière sur toute la surface de la couche 20. Ainsi, dans une zone Z1 définissant des spires de l'antenne 11 par exemple, le fil est incrusté sur une plus grande profondeur que dans une deuxième zone Z2 réservée à l'élément sécuritaire. Ainsi, dans la première zone Z1 réservée à l'antenne 11, le fil d'antenne peut être partiellement ou totalement incrusté dans la couche 20, c'est - à - dire que 50% à 100% du diamètre du fil peut être incrusté dans la couche 20. En revanche, dans la deuxième zone Z2 réservée à l'élément sécuritaire 13, le fil est incrusté à une profondeur n'excédant pas de préférence 80% du diamètre du fil. De préférence, entre 40 à 80% du diamètre du fil est incrusté dans la couche 20, de manière à ce que la surépaisseur qu'il crée soit toujours visible depuis la surface externe du document et qu'il puisse également être détecté au toucher.

Grâce à l'invention, on crée un motif en surépaisseur, comme un embossage positif, dans la couverture, le motif formant ainsi un élément sécuritaire visuel dans le document de sécurité. De manière avantageuse, l'antenne 11 peut faire partie de cet élément sécuritaire 13. Une surépaisseur créée par l'antenne n'est alors plus interprétée comme un défaut visuel mais comme faisant partie intégrante de l'élément sécuritaire. Par conséquent, l'intégration de l'antenne dans le document de sécurité ainsi que la réalisation de l'élément sécuritaire visuel de premier niveau s'en trouve facilitée, ce qui contribue également à réduire le coût de fabrication.

De plus, le fait de créer des surépaisseurs différentes entre le motif spiralé de l'antenne 11 et le motif constitutif de l'élément sécuritaire 13, permet de réaliser un effet visuel et tactile plus difficile à reproduire.

## Revendications

1. Document de sécurité comprenant au moins un élément sécuritaire visuel (13 ; 16), ledit document de sécurité étant **caractérisé en ce que** l'élément sécuritaire visuel (13 ; 16) est constitué par un matériau métallique formant un motif en surépaisseur visible en surface dudit document de sécurité.

2. Document de sécurité selon la revendication 1, **caractérisé en ce qu'**il comprend en outre une antenne radiofréquence (11) noyée dans son corps, et **en ce que** l'antenne et l'élément sécuritaire visuel (13, 16) sont réalisés dans le même matériau métallique.

3. Document de sécurité selon la revendication 2, **caractérisé en ce que** l'antenne (11) forme elle aussi un motif en surépaisseur en surface du document de sécurité, de sorte qu'elle fait partie intégrante dudit élément sécuritaire.

4. Document de sécurité selon l'une des revendications 2 à 3, **caractérisé en ce que** l'élément sécuritaire (13 ; 16) et l'antenne (11) présentent des surépaisseurs différentes en surface dudit document.

5. Document de sécurité selon l'une des revendications 1 à 4, **caractérisé en ce que** le matériau métallique de constitution de l'antenne et de l'élément sécuritaire est choisi parmi au moins l'un des matériaux suivants : un fil métallique, une feuille métallique gravée, une encre chargée de particules métalliques.

6. Document de sécurité selon l'une des revendications 1 à 5, **caractérisé en ce qu'**il se présente sous forme de carte ou de livret.

7. Procédé de fabrication d'un document de sécurité comprenant, noyée dans son corps au moins un élément sécuritaire visuel (13 ; 16), ledit procédé étant **caractérisé en ce qu'**il comprend une étape de réalisation de l'élément sécuritaire visuel (13 ; 16) au moyen d'un matériau métallique appliqué sous la forme d'un motif en surépaisseur.

8. Procédé selon la revendication 7, **caractérisé en ce qu'**il comprend en outre une étape de réalisation d'une antenne radiofréquence (11), et **en ce que** les étapes de réalisation de l'élément sécuritaire (13, 16) et de réalisation de l'antenne (11) utilisent le même matériau métallique.

9. Procédé selon la revendication 8, **caractérisé en ce que** les étapes de réalisation de l'antenne et de l'élément sécuritaire sont simultanées.

10. Procédé selon l'une des revendications 8 à 9, **caractérisé en ce que** l'antenne et l'élément sécuritaire sont réalisés par incrustation d'un fil métallique dans une couche de constitution du document.

11. Procédé selon la revendication 10, **caractérisé en ce que** le fil métallique de constitution de l'antenne et de l'élément sécuritaire est incrusté, dans la couche de constitution du document, à des profondeurs différentes selon le motif à réaliser, de sorte que l'antenne peut elle aussi présenter une surépaisseur.

12. Procédé selon l'une des revendications 8 à 9, **caractérisé en ce que** l'antenne et l'élément sécuritaire sont réalisés par apport de matière sur une couche de constitution du document.

13. Procédé selon la revendication 12, **caractérisé en ce que** les épaisseurs de l'antenne et de l'élément sécuritaire sont différentes, de sorte que l'antenne peut elle aussi présenter une surépaisseur.

14. Procédé selon l'une des revendications 8 à 13, **caractérisé en ce qu'**il comprend en outre une étape consistant à couper (15) un lien reliant l'antenne et l'élément sécuritaire.

15. Procédé selon la revendication 14, **caractérisé en ce que** l'étape de coupure (15) du lien reliant l'antenne à l'élément sécuritaire est réalisée simultanément à une étape de réalisation d'une cavité (14) d'accueil d'un module électronique (19) destiné à être connecté à deux extrémités (17a, 17b) de l'antenne.

16. Procédé selon l'une des revendications 8 à 15, **caractérisé en ce qu'**il comprend en outre une étape de laminage d'une couche supérieure (22), sur la couche (10, 20) supportant l'antenne (11) et l'élément sécuritaire (13 ; 16), ladite couche supérieure formant une surface externe dudit document et épousant le motif en surépaisseur de l'élément sécuritaire.
